# EUROPEAN PATENT SPECIFICATION

(11) **EP 2 916 510 B1**
(45) Date of publication and mention of the grant of the patent: **31.01.2018**
(21) Application number: 14157510.0
(22) Date of filing: 03.03.2014
(51) Int. Cl.: H04L 29/06

(54) **Network authentication method for secure user identity verification using user positioning information**
Netzwerkauthentifizierungsverfahren zur sicheren Benutzeridentitätsverifizierung mit Ortungsinformationen
Procédé d'authentification de réseau de vérification d'identité d'un utilisateur sécurisé à l'aide des informations de positionnement d'utilisateur

(43) Date of publication of application: 09.09.2015
(73) Proprietor: Keypasco AB, 41118 Gothenburg (SE)
(72) Inventor: Skygebjerg, Per, SE-411 18 Gothenburg (SE)
(74) Representative: Strehl Schübel-Hopf & Partner

(56) References cited:
- EP-A1- 2 506 525
- GB-A- 2 492 614
- US-A1- 2004 250 074

## Description

The invention relates to network identity authentication, and more particularly to a network authentication method for secure verification of identity of a user.

Currently, various web transactions have become increasingly popular. In order to secure the web transactions, user identity authentication is absolutely necessary. However, due to the increasing numbers of web users and web crimes, and the continuous progress of criminal techniques, for example, an Internet content provider (ICP) needs to provide an identity verification device for each user. Thus, the cost of customer service for personalization, distribution and troubleshooting is considerable. Further, it is quite inconvenient that the user needs to have different identity verification devices for different ICPs. Moreover, aside from intercepting and stealing user IDs and passwords, hackers also try to manipulate transaction data. Therefore, the ICP is often forced to change hardware equipments, thereby generating additional cost.

Therefore, an object of the present invention is to provide a network authentication method for secure verification of the identity of a user that can overcome the aforesaid drawbacks of the prior art.

US 2004/250074 A1 discloses a method for providing secure access to an application service, in which a security token and a proximity token check that their locations are close to each other before initiating cryptographic processing between the security token and the application service. GB 2 492 614 A discloses another related authentication method performed in a terminal when it is within a predefined distance from a mobile device. EP 2 506 525 A1 discloses a related authorization method performed between a client device and a server device.

According to one aspect of the present invention, there is provided a network authentication method according to independent claim 1. According to another aspect of the present invention, there is provided a network authentication method according to independent claim 11. Other features and advantages of the present invention will become apparent in the following detailed description of the preferred embodiments with reference to the accompanying drawings, of which:
Figure 1 is a schematic block diagram illustrating a network authentication system that is configured for implementing the first preferred embodiment of a network authentication method according to the present invention;
Figure 2 is a flow chart illustrating the first preferred embodiment;
Figure 3 is a flow chart of a first procedure between steps S23 and S24 of the first preferred embodiment;
Figure 4 is a flow chart of a second procedure between steps S23 and S24 of the first preferred embodiment;
Figure 5 is a flow chart of a third procedure between steps S23 and S24 of the first preferred embodiment;
Figure 6 is a schematic block diagram illustrating a first variation of the network authentication system;
Figure 7 is a flow chart of a fourth procedure between steps S23 and S24 of the first preferred embodiment to be implemented by the first variation of the network authentication system of Figure 6;
Figure 8 is a schematic block diagram illustrating a second variation of the network authentication system;
Figure 9 is a flow chart of a fifth procedure between steps S23 and S24 of the first preferred embodiment to be implemented by the second variation of the network authentication system of Figure 8;
Figure 10 is a schematic block diagram illustrating another network authentication system that is configured for implementing the second preferred embodiment of a network authentication method according to the present invention; and
Figure 11 is a flow chart illustrating the second preferred embodiment.

Before the present invention is described in greater detail, it should be noted that like elements are denoted by the same reference numerals throughout the disclosure.

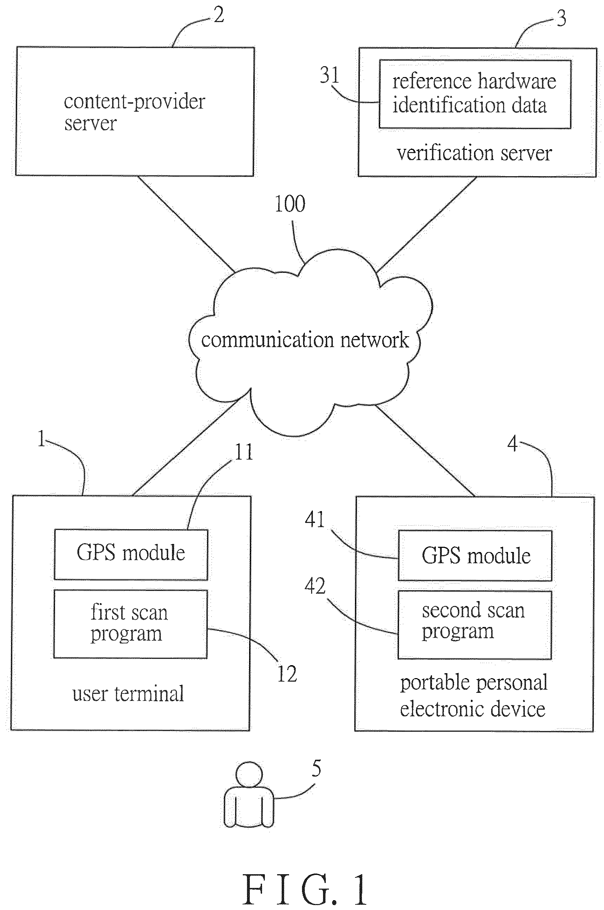

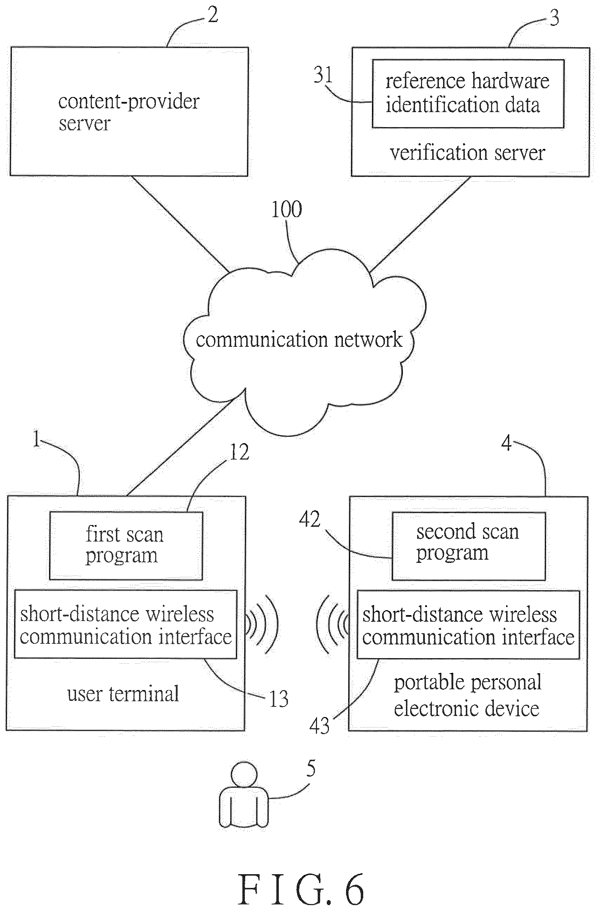

Referring to Figure 1, a network authentication system is used to implement the first preferred embodiment of a network authentication method for secure identification of the identity of a user 5 according to the present invention. The network authentication system includes a user terminal 1, such as a personal computer or a notebook computer, operated by the user 5, a content-provider server 2, such as the server of an Internet content provider (ICP), a verification server 3, and a portable personal electronic device 4 carried by the user 5. The user terminal 1, the content-provider server 2 and the verification server 3 are connected to a communication network 100, such as the Internet. The portable personal electronic device 4 is capable of connection with the communication network 100 and/or short-distance connection with the user terminal 1 (see, for instance, Figure 6). In this embodiment, if the identity of the user 5 is successfully authenticated by the network authentication system, the user 5 is allowed data access to the content-provider server 2 using the user terminal 1.

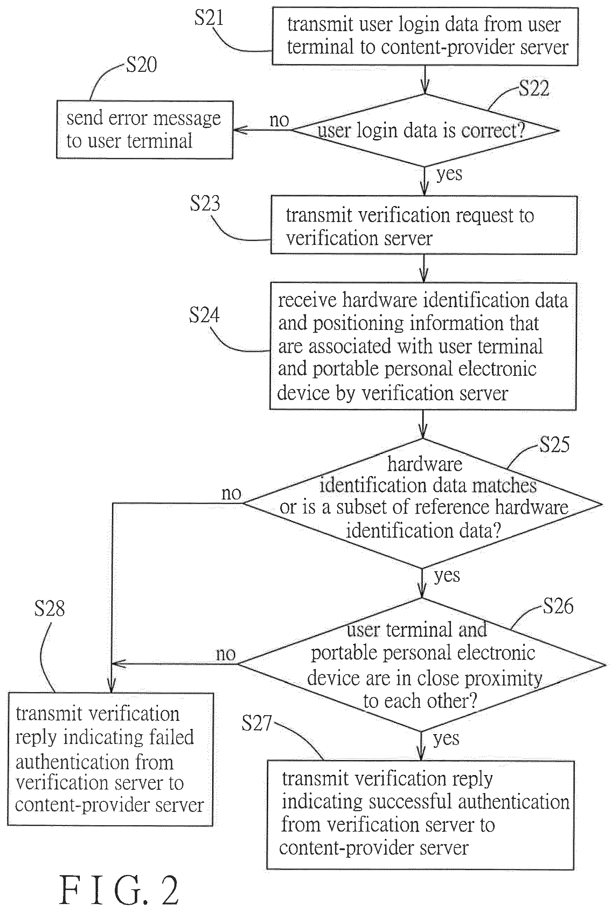

Figure 2 is a flow chart of the first preferred embodiment of the network authentication method illustrating how the identity of the user 5 is verified. The first preferred embodiment of the network authentication method includes the following steps.

In step S21, the user 5 inputs user login data using a user input interface (not shown) of the user terminal 1 at a website provided by the content-provider server 2. The user login data is then transmitted from the user terminal 1 to the content-provider server 2 via the communication network 100. In this embodiment, the user login data includes a user identification (ID) serving as a user identifier, and a password.

In step S22, upon receipt of the user login data from the user terminal 1, the content-provider server 2 checks whether the user login data is correct. If the result is affirmative, the flow proceeds to step S23. Otherwise, the content-provider server 2 sends an error message to the user terminal 1 for displaying on a display device (not shown) of the user terminal 1 (step S20).

In step S23, the content-provider server 2 transmits a verification request, which includes the user identifier, to the verification server 3 via the communication network 100. In this embodiment, the verification server 3 may be regarded as a third party appointed by the content-provider server 2 to perform identity authentication.

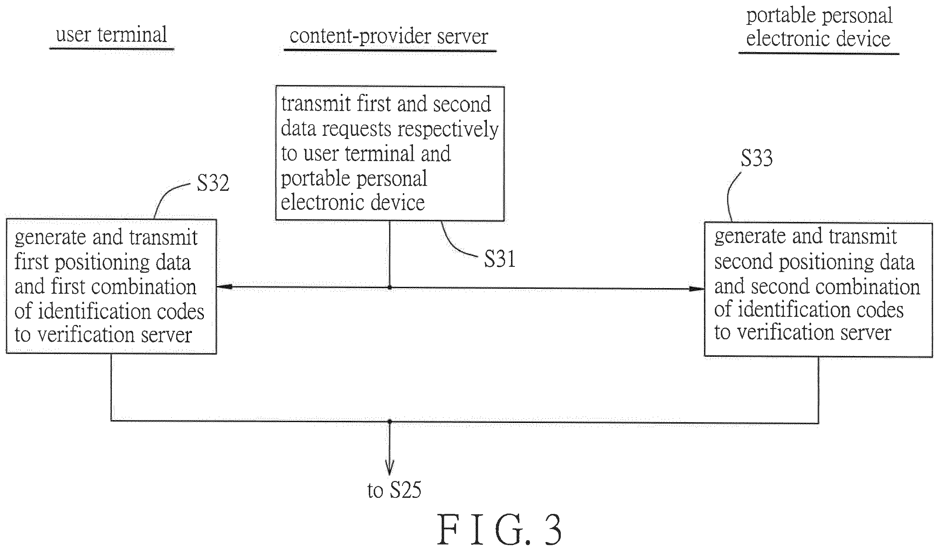

In step S24, after receipt of the verification request from the content-provider server 2, the verification server 3 further receives hardware identification data and positioning information that are associated with the user terminal 1 and the portable personal electronic device 4. For example, as shown in Figure 1, the user terminal 1 includes a global positioning system (GPS) module 11, and pre-stores a first scan program 12. The portable personal electronic device 4 may be, but is not limited to, a smart phone or a tablet computer, includes a GPS module 41, and pre-stores a second scan program 42. In this example, two different network addresses, e.g., IP addresses, are assigned respectively to the user terminal 1 and the portable personal electronic device 4. Figure 3 shows a first procedure to be performed between steps S23 and S24, illustrating how the hardware identification data and the positioning information are provided to the verification server 3. The first procedure includes the following steps. In step S31, after transmitting the verification request to the verification server 3, the content-provider server 2 further transmits first and second data requests respectively to the user terminal 1 and the portable personal electronic device 4 via the communication network 100. In step S32, in response to the first data request from the content-provider server 2, the user terminal 1 performs GPS positioning using the GPS module 11 so as to obtain first positioning data that corresponds to a geographical location of the user terminal 1, executes the first scan program 12 to obtain a first combination of identification codes of certain ones of a plurality of hardware components of the user terminal 1, and transmits the first positioning data and the first combination of the identification codes to the verification server 3 via the communication network 100. It is noted that since generation of the first combination of the identification codes using execution of the first scan program 12 is known to those skilled in the art, details of the same are omitted herein for the sake of brevity. In step S33, in response to the second data request from the content-provider server 2, the portable personal electronic device 4 performs GPS positioning using the GPS module 41 so as to obtain second positioning data that corresponds to a current geographical location of the portable personal electronic device 4, executes the second scan program 42 to obtain a second combination of identification codes of certain ones of a plurality of hardware components of the portable personal electronic device 4, and transmits the second positioning data and the second combination of the identification codes to the verification server 3 via the communication network 100. Thus, the first combination of the identification codes from the user terminal 1 and the second combination of the identification codes from the portable personal electronic device 4 cooperatively constitute the hardware identification data received by the verification server 3 in step S24. The first positioning data from the user terminal 1 and the second positioning data from the portable personal electronic device 4 cooperatively constitute the positioning information received by the verification server 3 in step S24.

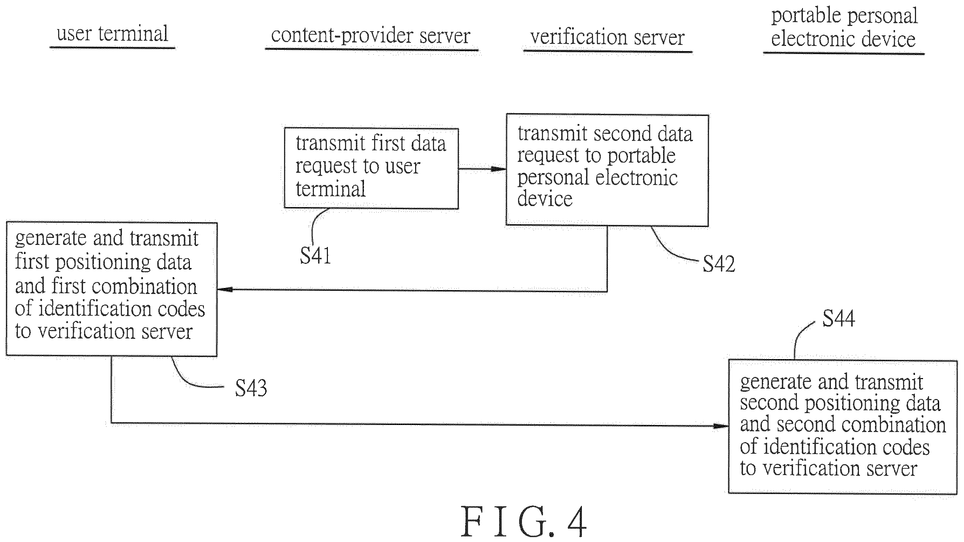

Figure 4 shows a second procedure to be conducted between step S23 and step S24, illustrating how the hardware identification data and the positioning information are provided to the verification server 3. The second procedure includes the following steps. In step S41, the content-provider server 2 transmits a first data request to the user terminal 1 via the communication network 100. In step S42, in response to receipt of the verification request from the content-provider server 2, the verification server 3 transmits a second data request to the portable personal electronic device 4 via the communication network 100. In step S43, similar to step S32 of Figure 3, the first combination of the identification codes, and the first positioning data both generated by the user terminal 1 are transmitted from the user terminal 1 to the verification server 3 via the communication network 100. In step S44, similar to step S33 of Figure 3, the second combination of the identification codes, and the second positioning data both generated by the portable personal electronic device 4 are transmitted from the portable personal electronic device 4 to the verification server 3 via the communication network 100.

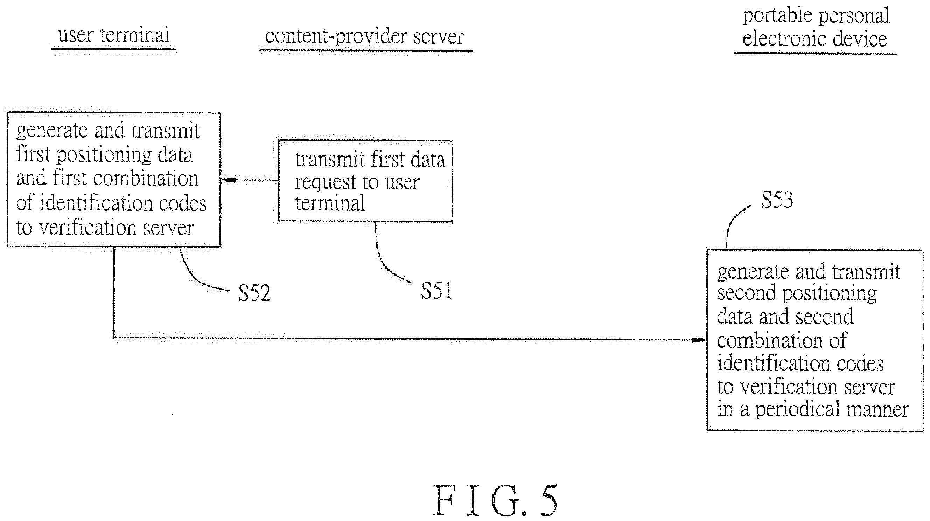

Figure 5 shows a third procedure to be performed between step S23 and step S24, illustrating how the hardware identification data and the positioning information are provided to the verification server 3. The third procedure includes the following steps. In step S51, similar to step S41 of Figure 4, the first data request is transmitted from the content-provider server 2 to the user terminal 1. In step S52, similar to step S43 of Figure 4, the first combination of the identification codes, and the first positioning data both generated by the user terminal 1 are transmitted from the user terminal 1 to the verification server 3 via the communication network 100. However, unlike the first and second procedures, the portable personal electronic device 4 is operable to perform GPS positioning so as to obtain the second positioning data in a periodic manner, to automatically execute the second scan program 42 to obtain the second combination of the identification codes, and to transmit the second positioning data and the second combination of the identification codes to the verification server 3 in a periodic manner. Therefore, step S53 of the third procedure essentially involves the periodic generation and transmission of the second positioning data and the second combination of the identification codes to the verification server 3 by the portable personal electronic device 4. In this case, the first combination of the identification codes from the user terminal 1, and the second combination of the identification codes, which is most recently received by the verification server 3 in step S24after the verification server 3 has received the verification request, cooperatively constitute the hardware identification data. The first positioning data from the user terminal 1, and the second positioning data, which is most recently received by the verification server 3 in step S24, cooperatively constitute the positioning information.

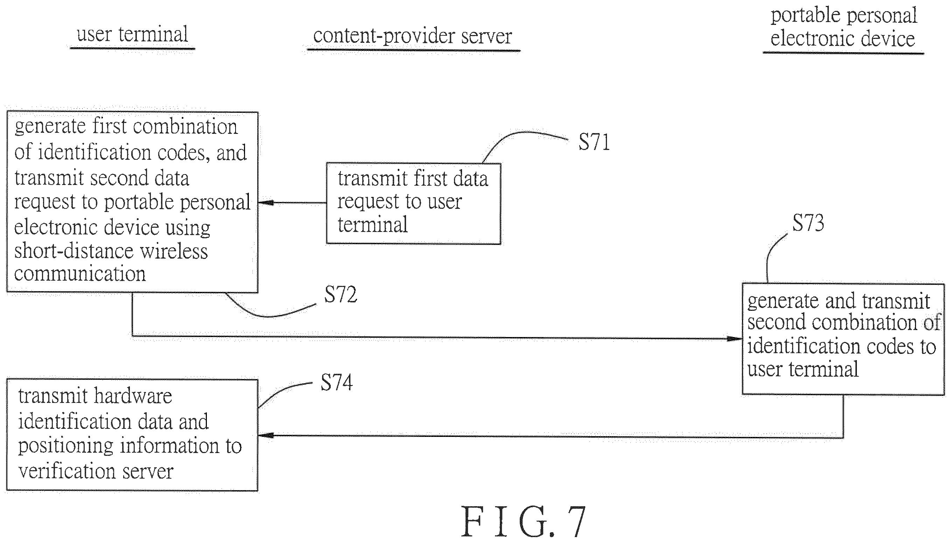

Referring to Figure 6, a first variation of the network authentication system is shown. Unlike the network authentication system of Figure 1, the user terminal 1 includes a short-distance wireless communication interface 13, and pre-stores the first scan program 12. The portable personal electronic device 4 is unable to connect with the communication network 100, includes a short-distance wireless communication interface 43, and pre-stores the second scan program 42. The short-distance wireless communication interfaces 13, 43 may use near field communication (NFC), Bluetooth or wireless fidelity (Wi-Fi) technology. Figure 7 shows a fourth procedure to be performed between step S23 and step S24 by the network authentication system of Figure 6, illustrating how the hardware identification data and the positioning information are provided to the verification server 3. The fourth procedure includes the following steps. In step S71, similar to step S41 of Figure 4, the first data request is transmitted from the content-provider server 2 to the user terminal 1. In step S72, in response to the first data request from the content-provider server 2, the user terminal 1 executes the first scan program 12 to obtain the first combination of the identification codes. When the portable personal electronic device 4 is in close proximity to the user terminal 1 to establish a short-distance wireless communication link therewith using the short-distance wireless communication interfaces 13, 43, the user terminal 1 transmits the second data request to the portable personal electronic device 4 through the short-distance wireless communication link. In step S73, in response to the second data request from the user terminal 1, the portable personal electronic device 4 executes the second scan program 42 to obtain the second combination of the identification codes and transmits the second combination of the identification codes to the user terminal 1 through the short-distance wireless communication link. In this case, the second combination of the identification codes serves as identification data associated with the portable personal electronic device 4. In step S74, the user terminal 1 transmits, to the verification server 3 via the communication network 100, the hardware identification data, which consists of the first combination of the identification codes and the second combination of the identification codes, i.e., the identification data, as well as the positioning information, which indicates that the user terminal 1 and the portable personal electronic device 4 share the same network address, i.e., the network address assigned to the user terminal 1. Thus, the hardware identification data and the positioning information are obtained by the verification server 3.

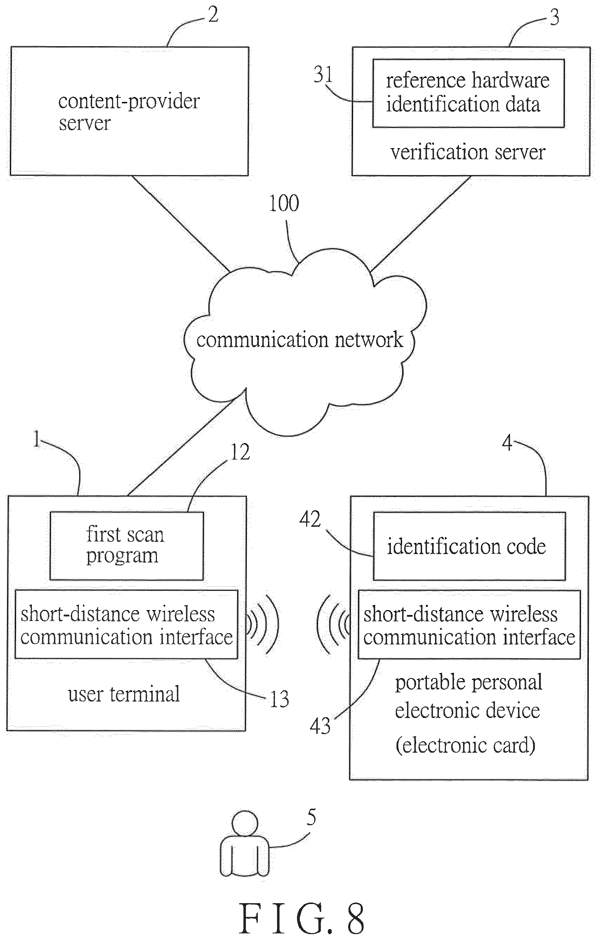

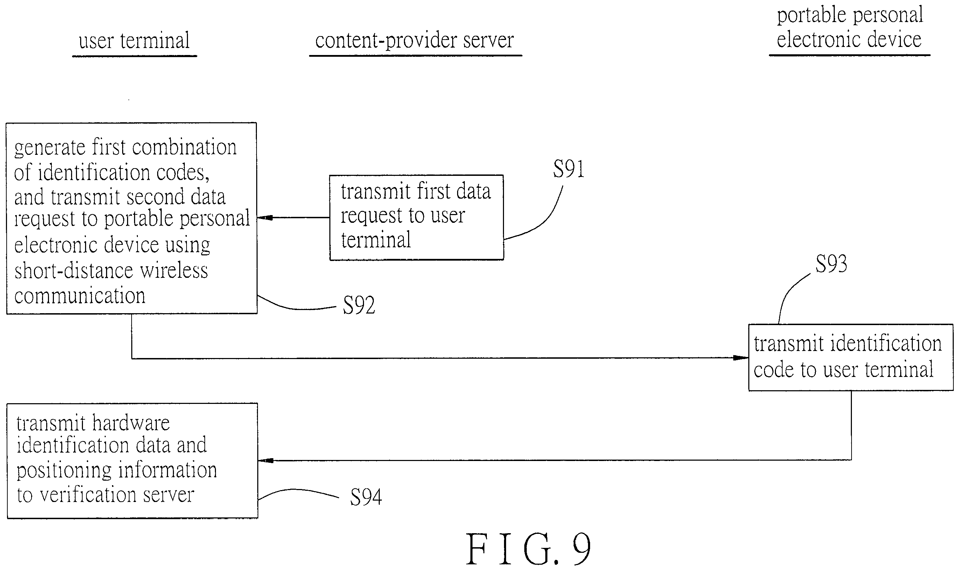

Referring to Figure 8, a second variation of the network authentication system is shown. Unlike the network authentication system of Figure 6, the portable personal electronic device 4 may be an electronic card, and pre-stores an identification code, which uniquely corresponds to the portable personal electronic device 4 (the electronic card) . In addition, the short-distance wireless communication interfaces 13, 43 may use radio frequency identification (RFID) technology. Figure 9 shows a fifth procedure to be performed between step S23 and step S24 by the network authentication system of Figure 8, illustrating how the hardware identification data and the positioning information are provided to the verification server 3 . The fifth procedure includes the following steps. In step S91, similar to step S71 of Figure 7, the first data request is transmitted from the content-provider server 2 to the user terminal 1. In step S92, similar to step S72 of Figure 7, the first combination of the identification codes is generated by the user terminal 1, and the second data request is transmitted from the user terminal 1 to the portable personal electronic device 4 using short-distance wireless communication. In step S93, in response to the second data request from the user terminal 1, the portable personal electronic device 4 transmits the identification code, which serves as the identification data, to the user terminal 1 using short-distance wireless communication. In step S94, the user terminal 1 transmits the hardware identification data, which consists of the first combination of the identification codes and the identification code, i.e., the identification data, and the positioning information, which indicates that the user terminal 1 and the portable personal electronic device 4 are in close proximity to each other, via the communication network 100. Thus, the hardware identification data and the positioning information are obtained by the verification server 3.

Referring back to Figures 1 and 2, after step S24, the method proceeds to step S25, where in response to the verification request, the verification server 3 determines whether the hardware identification data obtained thereby matches reference hardware identification data 31, which is pre-stored therein and which corresponds to the user identifier, i.e., the user ID. If the hardware identification data is determined to be a subset of the reference hardware identification data 31, the flow proceeds to step S26. Otherwise, the flow goes to step S28.

It should be noted that, during a registration procedure prior to authentication, the user terminal 1 and the portable personal electronic device 4 provided by the same owner are registered in the content-provider server 2, and are loaded respectively with the first scan program 12, and the second scan program 42 (Figures 1 and 6) or the identification code (Figure 8). Thereafter, the first and second scan programs 12, 42 are executed respectively by the user terminal 1 and the portable personal electronic device 4 to obtain the identification codes of the hardware components of the user terminal 1, and the identification codes of the hardware components of the portable personal electronic device 4 that cooperatively constitute the reference hardware identification data 31 corresponding to the user identifier of the owner. In an alternative, the first and second scan programs 12, 42 may obtain the identification codes of the certain ones of the hardware components of the user terminal 1, and the identification codes of the certain ones of the hardware components of the portable personal electronic device 4 to cooperatively constitute the reference hardware identification data 31. Alternatively, the identification codes obtained using execution of the first scan program 12 and associated with the user terminal 1, the identification code loaded in the portable personal electronic device 4 cooperatively constitute the reference hardware identification data 31 corresponding to the user identifier of the owner. Then, the reference hardware identification data 31 is stored in the verification server 3 for authentication purposes. Therefore, if the hardware identification data is determined to be a subset of the reference hardware identification data 31 (or a complete match in the alternative case) in step S25, the user terminal 1 operated by the user 5 and the portable personal electronic device 4 carried by the user 5 belong to the same owner.

In step S26, the verification server 3 determines, based on the positioning information, whether the user terminal 1 and the portable personal electronic device 4 are in close proximity to each other. For example, when the first positioning data generated in sub-steps S32, S43 and S52 of Figures 3, 4 and 5 is identical to the second positioning data generated in sub-steps S33, S44 and S53 of Figures 3, 4 and 5, when the positioning information transmitted in sub-step S74 of Figure 7 indicates that the user terminal 1 and the portable personal electronic device 4 share the same network address or when the positioning information transmitted in sub-step S94 of Figure 9 indicates that the user terminal 1 and the portable personal electronic device 4 are in close proximity to each other, the verification server 4 determines that the user terminal 1 and the portable personal electronic device 4 are in close proximity to each other, and the flow then proceeds to step S27. Otherwise, the flow goes to step S28.

It should be noted that, when the user terminal 1 and the portable personal electronic device 4 are in close proximity to each other (step S26) while an affirmative determination is made in step S25, the user 5 is verified as the owner of the user terminal 1 and the portable personal electronic device 4.

In step S27, the verification server 3 transmits a verification reply indicating successful authentication of the identity of the user 5 to the content-provider server 2 via the communication network 100. Thus, the user 5 is allowed data access to the content-provider server 2.

In step S28, the verification server 3 transmits a verification reply indicating failed authentication of the identity of the user 5 to the content-provider server 2 via the communication network. Thus, the user 5 is denied data access to the content-provider server 2.

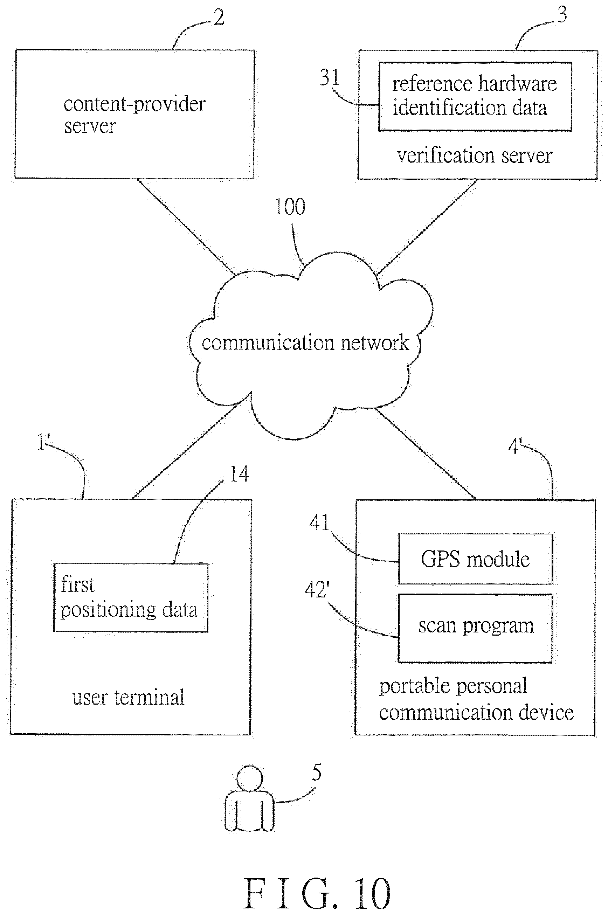

Referring to Figure 10, another network authentication system, which is a modification of the network authentication system of Figure 1, is used to implement the second preferred embodiment of a network authentication method for secure identification of the identity of a user 5 according to the present invention. Unlike the network authentication system of Figure 1, the user terminal 1' of the network authentication system of Figure 10 may be, but is not limited to, a point of sale (POS) terminal or an automated teller machine (ATM), and pre-stores first positioning data 14 corresponding to a geographical location of the user terminal 1'. In addition, the portable personal electronic device 4' is a portable personal communication device 4', which may be, but is not limited to, a smart phone or a tablet computer. The portable personal communication device 4' includes a GPS module 41, and pre-stores a scan program 42'. In this embodiment, if the identity of the user 5 is successfully authenticated by the network authentication system of Figure 10, the user 5 is allowed data access to the content-provider server 2.

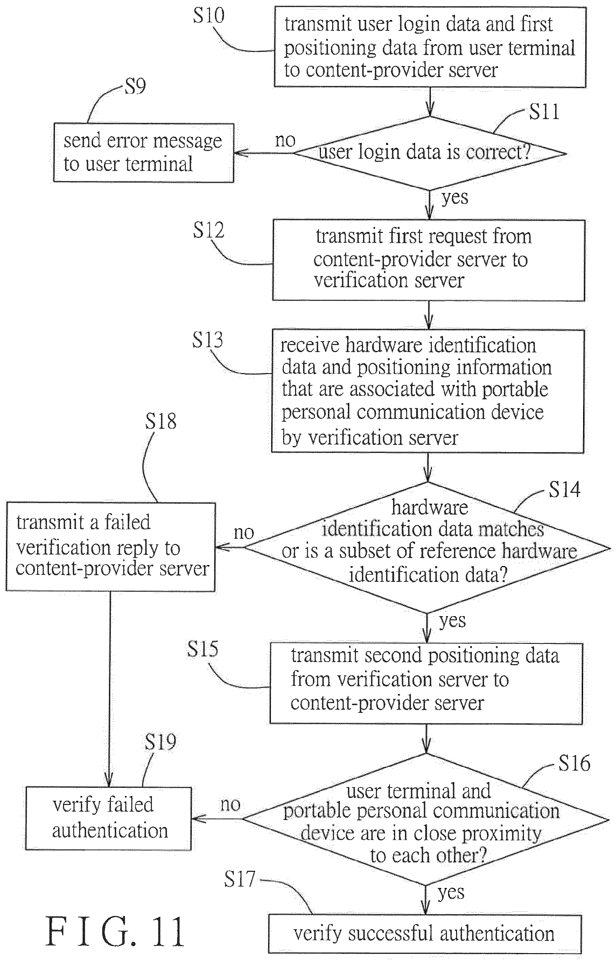

Figure 11 is a flow chart of the second preferred embodiment of the network authentication method illustrating how the identity of the user 5 is verified. The second preferred embodiment of the network authentication method includes the following steps.

In step S10, the user 5 inputs user login data using a user input interface (not shown) of the user terminal 1' at a website provided by the content-provider server 2. Then, the user terminal 1' transmits the user login data and the first positioning data to the content-provider server 2 via the communication network 100. In this embodiment, the user login data includes a user identification (ID) serving as a user identifier, and a password.

In step S11, upon receipt of the user login data and the first positioning data from the user terminal 1', the content-provider server 2 checks whether the user login data is correct. If the result is affirmative, the flow proceeds to step S12. Otherwise, the content-provider server 2 sends an error message to the user terminal 1' for displaying on a display device (not shown) of the user terminal 1' (step S9).

In step S12, the content-provider server 2 transmits a first request, which includes the user identifier, to the verification server 3 via the communication network 100. In this embodiment, the verification server 3 may be regarded as a third party appointed by the content-provider server 2 to perform hardware identification authentication.

In step S13, after receipt of the first request from the content-provider server 2, the verification server 3 further receives hardware identification data and positioning information that are associated with the portable personal communication device 4' from the portable personal communication device 4' via the communication network 100. In one example, in response to the first request from the content-provider server 2, the verification server 3 transmits a second request for the hardware identification data and the second positioning data to the portable personal communication device 4' via the communication network 100. Thus, in response to the second request from the verification server 3, the portable personal communication device 4' performs GPS positioning to generate the second positioning data that corresponds to a current geographical location of the portable personal communication device 4', executes the scan program 42' to obtain a combination of identification codes of certain ones of a plurality of hardware components (not shown) of the portable personal communication device 4' that serves as the hardware identification data, and transmits the second positioning data and the hardware identification data to the verification server 3 via the communication network 100. In another example, the portable personal communication device 4' is operable to perform GPS positioning so as to obtain the second positioning data in a periodic manner, to execute the scan program 42' to obtain the combination of the identification codes that serves as the hardware identification data automatically, and to transmit the second positioning data and the hardware identification data to the verification server via the communication network 100 in a periodic manner. Thus, the verification server 3 receives the hardware identification data and the second positioning data periodically.

In step S14, the verification server 3 determines whether the hardware identification data obtained thereby is a subset of reference hardware identification data 31, which is pre-stored in the verification server 3 and which corresponds to the user identifier. If the result of the determination is affirmative, the flow proceeds to step S15. Otherwise, the flow goes to step S18.

In step S15, the verification server 3 transmits the second positioning data to the content-provider server 2. It should be noted that, when the portable personal communication device 4' periodically transmits the hardware identification data and the second positioning data, the second positioning data, which is most recently received by the verification server 3 in step S13 after receipt of the first request from the content-provider server 2, is transmitted to the content-provider server 2.

In step S16, the content-provider server 2 determines, based on the first positioning data and the second positioning data, whether the user terminal 1' and the portable personal communication device 4' are in close proximity to each other. When the content-provider server 2 detects that the first positioning data is identical to the second positioning data, the content-provider server 2 determines that the user terminal 1' and the portable personal communication device 4' are in close proximity to each other. Then, the content-provider server 2 deems that the identity of the user 5 has been successfully authenticated (step S17). Thus, the user 5 is allowed data access to the content-provider server 2 using the user terminal 1' . Otherwise, the flow goes to step S19.

In step S18, when the hardware identification data is not found to be a subset of the reference hardware identification data 31, the verification server 3 transmits a failed verification reply to the content-provider server 2.

In step S19, in response to the failed verification reply from the verification server 3 in step S18, or when the user terminal 1' is determined as not in close proximity to the portable personal communication device 4' in step S16, the content-provider server 2 deems that authentication of the identity of the user 5 has failed. Thus, the user 5 is denied data access to the content-provider server 2.

In sum, the network authentication method of this invention utilizes hardware identification verification and positioning verification for the user terminal 1, 1' and the portable personal electronic device 4, 4'. Accordingly, it is relatively difficult for hackers to simultaneously steal hardware and positioning information associated with the user terminal 1, 1' and the portable personal electronic device 4, 4', thereby ensuring secure verification of the identity of the user 5. Further, the user' s own smart phone or tablet computer is used as the portable personal electronic device 4, 4' without requiring additional identity verification devices. Therefore, the cost of identity authentication for the content-provider server 2 is minimized.

## Claims

1. A network authentication method to be implemented by a network authentication system for secure verification of the identity of a user (5), the network authentication system including a user terminal (1) operated by the user (5), a content-provider server (2), a verification server (3), and a portable personal electronic device (4) carried by the user (5), the user terminal (1), the content-provider server (2) and the verification server (3) being connected to a communication network (100), the portable personal electronic device (4) being capable of connection with the communication network (100) and/or short-distance wireless communication with the user terminal (1), said network authentication method being **characterized by** the steps of:
a) upon receipt of correct user login data, which includes a user identifier, from the user terminal (1) via the communication network (100), the content-provider server (2) transmitting a verification request, which includes the user identifier, to the verification server (3) via the communication network (100);
b) after receipt of the verification request from the content-provider server (2), the verification server (3) further receiving hardware identification data and positioning information that are associated with the user terminal (1) and the portable personal electronic device (4) via the communication network (100);
c) in response to the verification request, the verification server (3) determining whether the hardware identification data obtained in step b) matches or is a subset of reference hardware identification data (31), which is pre-stored in the verification server (3) and which corresponds to the user identifier, and judging, based on the positioning information, whether the user terminal (1) and the portable personal electronic device (4) are in close proximity to each other; and
d) upon detecting that a match exists or that the hardware identification data is a subset of the reference hardware identification data (31) and judging that the user terminal (1) and the portable personal electronic device (4) are in close proximity to each other, the verification server (3) transmitting a verification reply indicating successful authentication of the identity of the user (5) to the content-provider server (2) via the communication network (100).

2. The network authentication method as claimed in Claim 1, the portable personal electronic device (4) being connected to the communication network (100), two different network addresses being assigned respectively to the user terminal (1) and the portable personal electronic device (4), the network authentication method being further **characterized by**, between steps a) and b), the steps of:
e) the content-provider server (2) transmitting a first data request to the user terminal (1) via the communication network (100);
f) in response to the first data request from the content-provider server (2), the user terminal (1) performing global positioning system (GPS) positioning so as to obtain first positioning data corresponding to a geographical location of the user terminal (1), executing a first scan program (12) pre-installed therein to obtain a first combination of identification codes of certain ones of a plurality of hardware components of the user terminal (1), and transmitting the first positioning data and the first combination of the identification codes to the verification server (3) via the communication network (100); and
g) the portable personal electronic device (4) performing GPS positioning so as to obtain second positioning data corresponding to a current geographical location of the portable personal electronic device (4), executing a second scan program (42) pre-installed therein to obtain a second combination of identification codes of certain ones of a plurality of hardware components of the portable personal electronic device (4), and transmitting the second positioning data and the second combination of the identification codes to the verification server (3) via the communication network (100); and
**characterized in that** the first combination of the identification codes transmitted in step f) and the second combination of the identification codes transmitted in step g) cooperatively constitute the hardware identification data received by the verification server (3) in step b), and the first positioning data transmitted in step f) and the second positioning data transmitted in step g) cooperatively constitute the positioning information received by the verification server (3) in step b).

3. The network authentication method as claimed in Claim 2, **characterized in that**:
in step e), the content-provider server (2) further transmits a second data request to the portable personal electronic device (4) via the communication network (100); and
in step g), the portable personal electronic device (100) performs GPS positioning and executes the second scan program (42) in response to receipt of the second data request from the content-provider server (2).

4. The network authentication method as claimed in Claim 2, being further **characterized by**, prior to step g), the step of:
f') in response to receipt of the verification request from the content-provider server (2), the verification server (3) transmitting a second data request to the portable personal electronic device (4) via the communication network (100); and
**characterized in that**, in step g), the portable personal electronic device (4) performs GPS positioning and executes the second scan program (42) in response to receipt of the second data request from the verification server (3).

5. The network authentication method as claimed in Claim 2, **characterized in that**:
in step g), the portable personal electronic device (4) performs GPS positioning so as to obtain the second positioning data in a periodic manner, automatically executes the second scan program (42) to obtain the second combination of the identification codes, and transmits the second positioning data and the second combination of the identification codes to the verification server (3) in a periodic manner; and
the first combination of the identification codes transmitted in step f), and the second combination of the identification codes, which is most recently transmitted to the verification server (3) in step g) after the verification server (3) has received the verification request, cooperatively constitute the hardware identification data, and the first positioning data transmitted in step f), and the second positioning data, which is most recently transmitted to the verification server (3) in step g) after the verification server (3) has received the verification request, cooperatively constitute the positioning information.

6. The network authentication method as claimed in Claim 2, **characterized in that**, in step c), the verification server (3) determines that the user terminal (1) and the portable personal electronic device (4) are in close proximity to each other when the first positioning data is identical to the second position data.

7. The network authentication method as claimed in Claim 1, the portable personal electronic device (4) being capable of short-distance wireless communication with the user terminal (1), the network authentication method being further **characterized by**, between steps a) and b), the steps of:
h) the content-provider server (2) transmitting a first data request to the user terminal (1) via the communication network (100);
i) in response to the first data request from the content-provider server (2), the user terminal (1) executing a first scan program (12) pre-installed therein to obtain a first combination of identification codes of certain ones of a plurality of hardware components of the user terminal (1), and, upon establishing a short-distance wireless communication link with the portable personal electronic device (4), transmitting a second data request to the portable personal electronic device (4) through the short-distance wireless communication link;
j) in response to the second data request from the user terminal (1), the portable personal electronic device (4) transmitting identification data associated therewith to the user terminal (1) through the short-distance wireless communication link; and
k) the user terminal (1) transmitting the hardware identification data, which consists of the first combination of the identification codes and the identification data, and the positioning information to the verification server (3) via the communication network (100).

8. The network authentication method as claimed in Claim 7, **characterized in that**, in step j), the portable personal electronic device (4) executes a second scan program (42) pre-installed therein to obtain a second combination of identification codes of certain ones of a plurality of hardware components of the portable personal electronic device (4), the second combination of the identification codes serving as the identification data.

9. The network authentication method as claimed in Claim 8, **characterized in that**, in step c), the verification server (3) determines that the user terminal (1) and the portable personal electronic device (4) are in close proximity to each other when the positioning information indicates that the user terminal (1) and the portable personal electronic device (4) share the same network address.

10. The network authentication method as claimed in Claim 7, the portable personal electronic device (4) being an electronic card, **characterized in that**:
in step j), the identification data is an identification code, which is pre-stored in and which corresponds uniquely to the electronic card; and
in step k), the positioning information indicates that the user terminal (1) and the portable personal electronic device (4) are in close proximity to each other.

11. A network authentication method to be implemented by a network authentication system for secure verification of the identity of a user (5), the network authentication system including a user terminal (1) operated by the user (5), a content-provider server (2), a verification server (3), and a portable personal communication device (4') carried by the user (5), the user terminal (1), the content-provider server (2), the verification server (3) and the portable personal communication device (4') being connected to a communication network (100), said network authentication method being **characterized by** the steps of :
a) upon receipt of correct user login data including a user identifier, and of first positioning data corresponding to a geographical location of the user terminal (1) from the user terminal (1) via the communication network (100), the content-provider server (2) transmitting to the verification server (3) a first request, which includes the user identifier, for second positioning data corresponding to a current geographical location of the portable personal communication device (4') via the communication network;
b) upon receipt of the first request from the content-provider server (2), the verification server (3) further receiving hardware identification data and second positioning data that are associated with the portable personal communication device (4') from the portable personal communication device (4') via the communication network (100);
c) the verification server (3) determining whether the hardware identification data obtained in step b) matches or is a subset of reference hardware identification data (31), which is pre-stored in the verification server (3) and which corresponds to the user identifier, and transmitting the second positioning data to the content-provider server (2) if a match exists or if the hardware identification data is a subset of the reference hardware identification data (31); and
d) upon receipt of the second positioning data from the verification server (3), the content-provider server (2) judging, based on the first positioning data received thereby in step a) and the second positioning data transmitted thereto in step c), whether the user terminal (1) and the portable personal communication device (4') are in close proximity to each other, and judging a successful authentication of the identity of the user (5) upon judging that the user terminal (1) and the portable personal communication device (4') are in close proximity to each other.

12. The network authentication method as claimed in Claim 11, being further **characterized by**, between steps a) and b), the steps of:
e) in response to the first request from the content-provider server (2), the verification server (3) transmitting a second request for the hardware identification data and the second positioning data to the portable personal communication device (4') via the communication network (100); and
f) in response to the second request from the verification server (3), the portable personal communication device (4') performing GPS positioning so as to generate the second positioning data that corresponds to a current geographical location of the portable personal communication device (4'), executing a scan program (42') pre-installed therein to obtain a combination of identification codes of certain ones of a plurality of hardware components of the portable personal communication device (4') that serves as the hardware identification data, and transmitting the second positioning data and the hardware identification data to the verification server (3) via the communication network (100).

13. The network authentication method as claimed in Claim 11, being further **characterized by** the step of:
g), the portable personal communication device (4') performing GPS positioning so as to generate the second positioning data in a periodic manner and executing a scan program (42') pre-installed therein to obtain a combination of identification codes of certain ones of a plurality of hardware components of the portable personal communication device (4') that serves as the hardware identification data automatically, and transmitting the second positioning data and the hardware identification data to the verification server (3) via the communication network (100) in a periodic manner; and
**characterized in that**, in step c), the second positioning data, which is mostly recently received by the verification server (3) in step b) after receipt of the first request from the content-provider server (2), is transmitted to the content-provider server (2) .

14. The network authentication method as claimed in Claim 11, **characterized in that**, in step d), the content-provider server (2) judges that the user terminal and the portable personal communication device (4') are in close proximity to each other when the first positioning data is identical to the second positioning data.

## Patentansprüche

1. Netzwerkauthentifizierungsverfahren, zu implementieren durch ein Netzwerkauthentifizierungssystem zur sicheren Verifikation der Identität eines Benutzers (5), wobei das Netzwerkauthentifizierungssystem ein von einem Benutzer (5) betriebenes Benutzerterminal (1), einen Inhaltsbereitstellungsserver (2), einen Verifikationsserver (3) und ein vom Benutzer getragenes tragbares persönliches elektronisches Gerät (4) enthält, wobei das Benutzerterminal (1), der Inhaltsbereitstellungsserver (2) und der Verifikationsserver (3) mit einem Kommunikationsnetzwerk (100) verbunden sind, wobei das tragbare persönliche elektronische Gerät (4) zur Verbindung mit dem Kommunikationsnetzwerk (100) und/oder zu drahtloser Kommunikation auf kurze Entfernung mit dem Benutzerterminal (1) in der Lage ist, wobei das Netzwerkauthentifizierungsverfahren durch die folgenden Schritte gekennzeichnet ist:
a) bei Empfang von korrekten Benutzerlogindaten, die eine Benutzeridentifikation enthalten, vom Benutzerterminal (1) über das Kommunikationsnetzwerk (100) überträgt der Inhaltsbereitstellungsserver (2) eine Verifikationsanfrage, die die Benutzeridentifikation enthält, über das Kommunikationsnetzwerk (100) an den Verifikationsserver (3);
b) nach dem Empfang der Verifikationsanfrage vom Inhaltsbereitstellungsserver (2) empfängt der Verifikationsserver (3) ferner Hardwareidentifikationsdaten und Positionsinformationen, die mit dem Benutzerterminal (1) und dem tragbaren persönlichen elektronischen Gerät (4) verknüpft sind, über das Kommunikationsnetzwerk (100);
c) auf die Verifikationsanfrage hin bestimmt der Verifikationsserver (3), ob die in Schritt b) erhaltenen Hard-, wareidentifikationsdaten mit Referenz-Hardwareidentifikationsdaten (31), die vorab im Verifikationsserver (3) gespeichert sind und die der Benutzeridentifikation entsprechen, übereinstimmen oder eine Teilmenge davon sind, und beurteilt, auf der Grundlage der Positionsinformationen, ob das Benutzerterminal (1) und das tragbare persönliche elektronische Gerät (4) sich in enger Nähe zueinander befinden; und
d) wenn detektiert wird, dass eine Übereinstimmung vorliegt oder dass die Hardwareidentifikationsdaten eine Teilmenge der Referenz-Hardwareidentifikationsdaten (31) sind, und beurteilt wird, dass das Benutzerterminal (1) und das tragbare persönliche elektronische Gerät (4) sich in enger Nähe zueinander befinden, überträgt der Verifikationsserver (3) eine Verifikationsantwort, die eine erfolgreiche Authentifizierung der Identität des Benutzers (5) angibt, über das Kommunikationsnetzwerk (100) an den Inhaltsbereitstellungsserver (2).

2. Netzwerkauthentifikationsverfahren nach Anspruch 1, wobei das tragbare persönliche elektronische Gerät (4) mit dem Kommunikationsnetzwerk (100) verbunden ist, zwei verschiedene Netzwerkadressen jeweils dem Benutzerterminal (1) und dem tragbaren persönlichen elektronischen Gerät (4) zugeschrieben sind, und das Netzwerkauthentifikationsverfahren zwischen den Schritten a) und b) ferner durch die folgenden Schritte gekennzeichnet ist:
e) der Inhaltsbereitstellungsserver (2) überträgt eine erste Datenanfrage über das Kommunikationsnetzwerk (100) an das Benutzerterminal (1);
f) auf die erste Datenanfrage vom Inhaltsbereitstellungsserver (2) hin führt das Benutzerterminal (1) eine GPS-Positionierung durch, um so einem geographischen Ort des Benutzerterminals (1) entsprechende erste Positionierungsdaten zu erhalten, führt ein darin vorab installiertes erstes Scanprogramm (12) aus, um eine erste Kombination von Identifikationscodes von bestimmten von mehreren Hardwarekomponenten des Benutzerterminals (1) zu erhalten, und überträgt die ersten Positionierungsdaten und die erste Kombination der Identifikationscodes über das Kommunikationsnetzwerk (100) an den Verifikationsserver (3); und
g) das tragbare persönliche elektronische Gerät (4) führt GPS-Positionierung durch, um so einem momentanen geographischen Ort des tragbaren persönlichen elektronischen Geräts (4) entsprechende zweite Positionierungsdaten zu erhalten, führt ein darin vorab installiertes zweites Scanprogramm (42) durch, um eine zweite Kombination von Identifikationscodes von bestimmten von mehreren Hardwarekomponenten des tragbaren persönlichen elektronischen Geräts (4) zu erhalten, und überträgt die zweiten Positionierungsdaten und die zweite Kombination der Identifikationscodes über das Kommunikationsnetzwerk (100) an den Verifikationsserver (3); und
**gekennzeichnet dadurch, dass** die in Schritt f) übertragene erste Kombination der Identifikationscodes und die in Schritt g) übertragene zweite Kombination der Identifikationscodes in Kooperation die vom Verifikationsserver (3) in Schritt b) empfangenen Hardwareidentifikationsdaten bilden und die in Schritt f) übertragenen ersten Positionierungsdaten und die in Schritt g) übertragenen zweiten Positionierungsdaten in Kooperation die vom Verifikationsserver (3) in Schritt b) empfangenen Positionierungsinformationen bilden.

3. Netzwerkauthentifikationsverfahren nach Anspruch 2, **gekennzeichnet dadurch, dass**:
in Schritt e) der Inhaltsbereitstellungsserver (2) ferner eine zweite Datenanfrage über das Kommunikationsnetzwerk (100) an das tragbare persönliche elektronische Gerät (4) überträgt, und
in Schritt g) das tragbare persönliche elektronische Gerät (100) auf den Empfang der zweiten Datenanfrage vom Inhaltsbereitstellungsserver (2) hin GPS-Positionierung durchführt und das zweite Scanprogramm (42) ausführt.

4. Netzwerkauthentifikationsverfahren nach Anspruch 2, ferner **gekennzeichnet durch** den folgenden Schritt vor Schritt g):
f') auf den Empfang der Verifikationsanfrage vom Inhaltsbereitstellungsserver (2) hin überträgt der Verifikationsserver (3) eine zweite Datenanfrage über das Kommunikationsnetzwerk (100) an das tragbare persönliche elektronische Gerät (4) und
**gekennzeichnet dadurch, dass** in Schritt g) das tragbare persönliche elektronische Gerät (4) auf den Empfang der zweiten Datenanfrage vom Verifikationsserver (3) hin GPS-Positionierung durchführt und das zweite Scanprogramm (42) ausführt.

5. Netzwerkauthentifikationsverfahren nach Anspruch 2, **gekennzeichnet dadurch, dass**:
in Schritt g) das tragbare persönliche elektronische Gerät (4) GPS-Positionierung durchführt, um so die zweiten Positionierungsdaten in einer periodisch wiederkehrenden Weise zu erhalten, das zweite Scanprogramm (42) automatisch ausführt, um die zweite Kombination der Identifikationscodes zu erhalten, und die zweiten Positionierungsdaten und die zweite Kombination der Identifikationscodes an den Verifikationsserver (3) in einer periodisch wiederkehrenden Weise überträgt und
die in Schritt f) übertragene erste Kombination der Identifikationscodes und die zweite Kombination der Identifikationscodes, die zuletzt in Schritt g) an den Verifikationsserver (3) übertragen wurde, nachdem der Verifikationsserver (3) die Verifikationsanfrage empfangen hat, in Kooperation die Hardwareidentifikationsdaten bilden und die in Schritt f) übertragenen ersten Positionsdaten und die zweiten Positionsdaten, die zuletzt in Schritt g) an den Verifikationsserver (3) übertragen wurden, nachdem der Verifikationsserver (3) die Verifikationsanfrage empfangen hat, in Kooperation die Positionierungsinformationen bilden.

6. Netzwerkauthentifikationsverfahren nach Anspruch 2, **gekennzeichnet dadurch, dass** in Schritt c) der Verifikationsserver (3) bestimmt, dass sich das Benutzerterminal (1) und das tragbare persönliche elektronische Gerät (4) in enger Nähe zueinander befinden, wenn die ersten Positionierungsdaten mit den zweiten Positionierungsdaten identisch sind.

7. Netzwerkauthentifikationsverfahren nach Anspruch 1, wobei das tragbare persönliche elektronische Gerät (4) zu drahtloser Kommunikation auf kurze Entfernung mit dem Benutzerterminal (1) in der Lage ist, wobei das Netzwerkauthentifikationsverfahren ferner durch die folgenden Schritte zwischen den Schritten a) und b) gekennzeichnet ist:
h) der Inhaltsbereitstellungsserver (2) überträgt eine erste Datenanfrage über das Kommunikationsnetzwerk (100) an das Benutzerterminal (1);
i) auf die erste Datenanfrage vom Inhaltsbereitstellungsserver (2) hin führt das Benutzerterminal (1) ein darin vorab installiertes erstes Scanprogramm (12) aus, um eine erste Kombination von Identifikationscodes von bestimmten von mehreren Hardwarekomponenten des Benutzerterminals (1) zu erhalten, und überträgt, bei Einrichtung einer drahtlosen Kommunikationsverbindung auf kurze Entfernung mit dem tragbaren persönlichen elektronischen Gerät (4), eine zweite Datenanfrage über die drahtlose Kommunikationsverbindung auf kurze Entfernung an das tragbare persönliche elektronische Gerät (4);
j) auf die zweite Datenanfrage vom Benutzerterminal (1) hin überträgt das tragbare persönliche elektronische Gerät (4) damit verknüpfte Identifikationsdaten über die drahtlose Kommunikationsverbindung auf kurze Entfernung an das Benutzerterminal (1) und
k) das Benutzerterminal (1) überträgt die Hardwareidentifikationsdaten, die aus der ersten Kombination der Identifikationscodes und den Identifikationsdaten bestehen, und die Positionierungsinformationen über das Kommunikationsnetzwerk (100) an den Verifikationsserver (3).

8. Netzwerkauthentifikationsverfahren nach Anspruch 7, **gekennzeichnet dadurch, dass** in Schritt j) das tragbare persönliche elektronische Gerät (4) ein darin vorab installiertes zweites Scanprogramm (42) ausführt, um eine zweite Kombination von Identifikationscodes von bestimmten von mehreren Hardwarekomponenten des tragbaren persönlichen elektronischen Geräts (4) zu erhalten, wobei die zweite Kombination der Identifikationscodes als die Identifikationsdaten dient.

9. Netzwerkauthentifikationsverfahren nach Anspruch 8, **gekennzeichnet dadurch, dass** im Schritt c) der Verifikationsserver (3) bestimmt, dass sich das Benutzerterminal (1) und das tragbare persönliche elektronische Gerät (4) in enger Nähe zueinander befinden, wenn die Positionierungsinformationen angeben, dass sich das Benutzerterminal (1) und das tragbare persönliche elektronische Gerät (4) die gleiche Netzwerkadresse teilen.

10. Netzwerkauthentifikationsverfahren nach Anspruch 7, wobei das tragbare persönliche elektronische Gerät (4) eine elektronische Karte ist, **gekennzeichnet dadurch, dass**:
im Schritt j) die Identifikationsdaten ein Identifikationscode sind, der vorab auf der elektronischen Karte gespeichert ist und der dieser eindeutig entspricht; und
im Schritt k) die Positionierungsinformationen angeben, dass sich das Benutzerterminal (1) und das tragbare persönliche elektronische Gerät (4) in enger Nähe zueinander befinden.

11. Netzwerkauthentifikationsverfahren, zu implementieren durch ein Netzwerkauthentifikationssystem zur sicheren Verifikation der Identität eines Benutzers (5), wobei das Netzwerkauthentifikationssystem ein von einem Benutzer (5) betriebenes Benutzerterminal (1), einen Inhaltsbereitstellungsserver (2), einen Verifikationsserver (3) und ein vom Benutzer (5) getragenes tragbares persönliches Kommunikationsgerät (4') enthält, wobei das Benutzerterminal (1), der Inhaltsbereitstellungsserver (2), der Verifikationsserver (3) und das tragbare persönliche Kommunikationsgerät (4') mit einem Kommunikationsnetzwerk (100) verbunden sind, wobei das Netzwerkauthentifikationsverfahren durch die folgenden Schritte gekennzeichnet ist:
a) bei Empfang von korrekten Benutzerlogindaten, die eine Benutzeridentifikation enthalten, und von einem geographischen Ort des Benutzerterminals (1) entsprechenden ersten Positionierungsdaten vom Benutzerterminal (1) über das Kommunikationsnetzwerk (100), überträgt der Inhaltsbereitstellungsserver (2) an den Verifikationsserver (3) eine erste Anfrage, die die Benutzeridentifikation enthält, nach einem momentanen geographischen Ort des tragbaren persönlichen Kommunikationsgeräts (4') entsprechenden zweiten Positionierungsdaten über das Kommunikationsnetzwerk;
b) bei Empfang der ersten Anfrage vom Inhaltsbereitstellungsserver (2) empfängt der Verifikationsserver (3) ferner Hardwareidentifikationsdaten und zweite Positionierungsdaten, die mit dem tragbaren persönlichen Kommunikationsgerät (4') verknüpft sind, vom tragbaren persönlichen Kommunikationsgerät (4') über das Kommunikationsnetzwerk (100);
c) der Verifikationsserver (3) bestimmt, ob die in Schritt b) erhaltenen Hardwareidentifikationsdaten mit Referenz-Hardwareidentifikationsdaten (31), die vorab im Verifikationsserver (3) gespeichert sind und die der Benutzeridentifikation entsprechen, übereinstimmen oder eine Teilmenge davon sind, und überträgt die zweiten Positionierungsdaten an den Inhaltsbereitstellungsserver (2), falls eine Übereinstimmung vorliegt oder falls die Hardwareidentifikationsdaten eine Teilmenge der Referenz-Hardwareidentifikationsdaten (31) sind; und
d) bei Empfang der zweiten Positionierungsdaten vom Verifikationsserver (3) beurteilt der Inhaltsbereitstellungsserver (2), auf der Grundlage der dadurch in Schritt a) empfangenen ersten Positionierungsdaten und der daran in Schritt c) übertragenen zweiten Positionierungsdaten, ob sich das Benutzerterminal (1) und das tragbare persönliche Kommunikationsgerät (4') in enger Nähe zueinander befinden, und beurteilt eine Authentifizierung der Identität des Benutzers (5) als erfolgreich, wenn beurteilt wird, dass sich das Benutzerterminal (1) und das tragbare persönliche Kommunikationsgerät (4') in enger Nähe zueinander befinden.

12. Netzwerkauthentifikationsverfahren nach Anspruch 11, ferner durch die folgenden Schritte zwischen Schritt a) und b) gekennzeichnet:
e) auf den Empfang der ersten Anfrage vom Inhaltsbereitstellungsserver (2) hin überträgt der Verifikationsserver (3) eine zweite Anfrage nach den Hardwareidentifikationsdaten und den zweiten Positionierungsdaten über das Kommunikationsnetzwerk (100) an das tragbare persönliche Kommunikationsgerät (4'); und
f) auf die zweite Anfrage vom Verifikationsserver (3) hin führt das tragbare persönliche Kommunikationsgerät (4') GPS-Positionierung durch, um so die zweiten Positionierungsdaten, die einem momentanen geographischen Ort des tragbaren persönlichen Kommunikationsgeräts (4') entsprechen zu erzeugen, führt ein darin vorab installiertes Scanprogramm (42') aus, um eine Kombination von Identifikationscodes von bestimmten von mehreren Hardwarekomponenten des tragbaren persönlichen Kommunikationsgeräts (4'), die als die Hardwareidentifikationsdaten dient, zu erhalten, und überträgt die zweiten Positionsdaten und die Hardwareidentifikationsdaten über das Kommunikationsnetzwerk (100) an den Verifikationsserver (3).

13. Netzwerkauthentifikationsverfahren nach Anspruch 11, ferner durch den folgenden Schritt gekennzeichnet:
g) das tragbare persönliche Kommunikationsgerät (4') führt GPS-Positionierung durch, um so die zweiten Positionierungsdaten in einer periodisch wiederkehrenden Weise zu erzeugen, und führt ein darin vorab installiertes Scanprogramm (42') automatisch aus, um eine Kombination von Identifikationscodes von bestimmten von mehreren Hardwarekomponenten des tragbaren persönlichen Kommunikationsgeräts (4'), die als die Hardwareidentifikationsdaten dient, zu erhalten, und überträgt die zweiten Positionsdaten und die Hardwareidentifikationsdaten über das Kommunikationsnetzwerk (100) in einer periodisch wiederkehrenden Weise an den Verifikationsserver (3) und
**gekennzeichnet dadurch, dass** in Schritt c) die zweiten Positionierungsdaten, die zuletzt in Schritt b) vom Verifikationsserver (3) nach dem Empfang der ersten Anfrage vom Inhaltsbereitstellungsserver (2) empfangen wurden, an den Inhaltsbereitstellungsserver (2) übertragen werden.

14. Netzwerkauthentifikationsverfahren nach Anspruch 11, **gekennzeichnet dadurch, dass** in Schritt d) der Inhaltsbereitstellungsserver (2) beurteilt, dass sich das Benutzerterminal und das tragbare persönliche Kommunikationsgerät (4') in enger Nähe zueinander befinden, wenn die ersten Positionierungsdaten mit den zweiten Positionierungsdaten identisch sind.

## Revendications

1. Procédé d'authentification de réseau destiné à être mis en oeuvre par un système d'authentification de réseau en vue de la vérification sécurisée de l'identité d'un utilisateur (5), le système d'authentification de réseau incluant un terminal d'utilisateur (1) exploité par l'utilisateur (5), un serveur de fournisseur de contenu (2), un serveur de vérification (3) et un dispositif électronique personnel portatif (4) porté par l'utilisateur (5), le terminal d'utilisateur (1), le serveur de fournisseur de contenu (2) et le serveur de vérification (3) étant connectés à un réseau de communication (100), le dispositif électronique personnel portatif (4) ayant une capacité de connexion avec le réseau de communication (100) et/ou de communication sans fil de courte distance avec le terminal d'utilisateur (1), ledit procédé d'authentification de réseau étant **caractérisé par** les étapes ci-dessous dans lesquelles :
a) suite à la réception de données de connexion d'utilisateur correctes, lesquelles incluent un identifiant d'utilisateur, en provenance du terminal d'utilisateur (1), par l'intermédiaire du réseau de communication (100), le serveur de fournisseur de contenu (2) transmet une demande de vérification, qui inclut l'identifiant d'utilisateur, au serveur de vérification (3), par l'intermédiaire du réseau de communication (100) ;
b) suite à la réception de la demande de vérification en provenance du serveur de fournisseur de contenu (2), le serveur de vérification (3) reçoit en outre des données d'identification de matériel et des informations de positionnement qui sont associées au terminal d'utilisateur (1) et au dispositif électronique personnel portatif (4) par l'intermédiaire du réseau de communication (100) ;
c) en réponse à la demande de vérification, le serveur de vérification (3) détermine si les données d'identification de matériel obtenues à l'étape b) correspondent ou sont un sous-ensemble de données d'identification de matériel de référence (31), lequel est stocké au préalable dans le serveur de vérification (3) et correspond à l'identifiant d'utilisateur, et détermine, sur la base des informations de positionnement, si le terminal d'utilisateur (1) et le dispositif électronique personnel portatif (4) sont à proximité étroite l'un de l'autre ; et
d) dès lors qu'il est détecté qu'il existe une correspondance ou que les données d'identification de matériel sont un sous-ensemble des données d'identification de matériel de référence (31), et dès lors qu'il est déterminé que le terminal d'utilisateur (1) et le dispositif électronique personnel portatif (4) sont à proximité étroite l'un de l'autre, le serveur de vérification (3) transmet une réponse de vérification indiquant l'authentification réussie de l'identité de l'utilisateur (5) au serveur de fournisseur de contenu (2) par l'intermédiaire du réseau de communication (100).

2. Procédé d'authentification de réseau selon la revendication 1, dans lequel le dispositif électronique personnel portatif (4) est connecté au réseau de communication (100), dans lequel deux adresses de réseau distinctes sont affectées respectivement au terminal d'utilisateur (1) et au dispositif électronique personnel portatif (4), le procédé d'authentification de réseau étant en outre **caractérisé par**, entre les étapes a) et b), les étapes ci-dessous dans lesquelles :
e) le serveur de fournisseur de contenu (2) transmet une première demande de données au terminal d'utilisateur (1) par l'intermédiaire du réseau de communication (100) ;
f) en réponse à la première demande de données en provenance du serveur de fournisseur de contenu (2), le terminal d'utilisateur (1) met en oeuvre un positionnement de système de géolocalisation (GPS) afin d'obtenir des premières données de positionnement correspondant à un emplacement géographique du terminal d'utilisateur (1), exécute un premier programme de balayage (12) installé au préalable dans celui-ci en vue d'obtenir une première combinaison de codes d'identification de certains composants d'une pluralité de composants matériels du terminal d'utilisateur (1), et transmet les premières données de positionnement et la première combinaison des codes d'identification au serveur de vérification (3) par l'intermédiaire du réseau de communication (100) ; et
g) le dispositif électronique personnel portatif (4) met en oeuvre un positionnement de système GPS afin d'obtenir des secondes données de positionnement correspondant à un emplacement géographique en cours du dispositif électronique personnel portatif (4), exécute un second programme de balayage (42) installé au préalable dans celui-ci en vue d'obtenir une seconde combinaison de codes d'identification de certains composants d'une pluralité de composants matériels du dispositif électronique personnel portatif (4), et transmet les secondes données de positionnement et la seconde combinaison des codes d'identification au serveur de vérification (3) par l'intermédiaire du réseau de communication (100) ; et
**caractérisé en ce que** la première combinaison des codes d'identification transmise à l'étape f) et la seconde combinaison des codes d'identification transmise à l'étape g) constituent de concert les données d'identification de matériel reçues par le serveur de vérification (3) à l'étape b), et les premières données de positionnement transmises à l'étape f) et les secondes données de positionnement transmises à l'étape g) constituent de concert les informations de positionnement reçues par le serveur de vérification (3) à l'étape b).

3. Procédé d'authentification de réseau selon la revendication 2, **caractérisé en ce que** :
à l'étape e), le serveur de fournisseur de contenu (2) transmet en outre une seconde demande de données au dispositif électronique personnel portatif (4) par l'intermédiaire du réseau de communication (100) ; et
à l'étape g), le dispositif électronique personnel portatif (100) met en oeuvre un positionnement de système GPS et exécute le second programme de balayage (42) en réponse à la réception de la seconde demande de données en provenance du serveur de fournisseur de contenu (2).

4. Procédé d'authentification de réseau selon la revendication 2, en outre **caractérisé par**, avant l'étape g), l'étape ci-dessous dans laquelle :
f') en réponse à la réception de la demande de vérification en provenance du serveur de fournisseur de contenu (2), le serveur de vérification (3) transmet une seconde demande de données au dispositif électronique personnel portatif (4) par l'intermédiaire du réseau de communication (100) ; et
**caractérisé en ce que**, à l'étape g), le dispositif électronique personnel portatif (4) met en oeuvre un positionnement de système GPS et exécute le second programme de balayage (42) en réponse à la réception de la seconde demande de données en provenance du serveur de vérification (3).

5. Procédé d'authentification de réseau selon la revendication 2, **caractérisé en ce que** :
à l'étape g), le dispositif électronique personnel portatif (4) met en oeuvre un positionnement de système GPS afin d'obtenir les secondes données de positionnement d'une manière périodique, exécute automatiquement le second programme de balayage (42) en vue d'obtenir la seconde combinaison des codes d'identification, et transmet les secondes données de positionnement et la seconde combinaison des codes d'identification au serveur de vérification (3) d'une manière périodique ; et
la première combinaison des codes d'identification transmise à l'étape f), et la seconde combinaison des codes d'identification, qui est la plus récemment transmise au serveur de vérification (3) à l'étape g) après que le serveur de vérification (3) a reçu la demande de vérification, constituent de concert les données d'identification de matériel, et les premières données de positionnement transmises à l'étape f), et les secondes données de positionnement, qui sont les plus récemment transmises au serveur de vérification (3) à l'étape g) après que le serveur de vérification (3) a reçu la demande de vérification, constituent de concert les informations de positionnement.

6. Procédé d'authentification de réseau selon la revendication 2, **caractérisé en ce que**, à l'étape c), le serveur de vérification (3) détermine que le terminal d'utilisateur (1) et le dispositif électronique personnel portatif (4) sont à proximité étroite l'un de l'autre lorsque les premières données de positionnement sont identiques aux secondes données de positionnement.

7. Procédé d'authentification de réseau selon la revendication 1, dans lequel le dispositif électronique personnel portatif (4) est apte à une communication sans fil de courte distance avec le terminal d'utilisateur (1), le procédé d'authentification de réseau étant en outre **caractérisé par**, entre les étapes a) et b), les étapes ci-dessous dans lesquelles :
h) le serveur de fournisseur de contenu (2) transmet une première demande de données au terminal d'utilisateur (1) par l'intermédiaire du réseau de communication (100) ;
i) en réponse à la première demande de données en provenance du serveur de fournisseur de contenu (2), le terminal d'utilisateur (1) exécute un premier programme de balayage (12) installé au préalable dans celui-ci en vue d'obtenir une première combinaison de codes d'identification de certains composants d'une pluralité de composants matériels du terminal d'utilisateur (1) et, suite à l'établissement d'une liaison de communication sans fil de courte distance avec le dispositif électronique personnel portatif (4), transmet une seconde demande de données au dispositif électronique personnel portatif (4) par le biais de la liaison de communication sans fil de courte distance ;
j) en réponse à la seconde demande de données en provenance du terminal d'utilisateur (1), le dispositif électronique personnel portatif (4) transmet des données d'identification qui lui sont associées au terminal d'utilisateur (1) par le biais de la liaison de communication sans fil de courte distance ; et
k) le terminal d'utilisateur (1) transmet les données d'identification de matériel, qui sont constituées de la première combinaison des codes d'identification et des données d'identification, et les informations de positionnement, au serveur de vérification (3) par l'intermédiaire du réseau de communication (100).

8. Procédé d'authentification de réseau selon la revendication 7, **caractérisé en ce que**, à l'étape j), le dispositif électronique personnel portatif (4) exécute un second programme de balayage (42) installé au préalable dans celui-ci en vue d'obtenir une seconde combinaison de codes d'identification de certains composants d'une pluralité de composants matériels du dispositif électronique personnel portatif (4), la seconde combinaison des codes d'identification faisant office des données d'identification.

9. Procédé d'authentification de réseau selon la revendication 8, **caractérisé en ce que**, à l'étape c), le serveur de vérification (3) détermine que le terminal d'utilisateur (1) et le dispositif électronique personnel portatif (4) sont à proximité étroite l'un de l'autre lorsque les informations de positionnement indiquent que le terminal d'utilisateur (1) et le dispositif électronique personnel portatif (4) partagent la même adresse de réseau.

10. Procédé d'authentification de réseau selon la revendication 7, dans lequel le dispositif électronique personnel portatif (4) est une carte électronique, **caractérisé en ce que** :
à l'étape j), les données d'identification sont un code d'identification, qui est stocké au préalable dans, et qui correspond uniquement à, la carte électronique ; et
à l'étape k), les informations de positionnement indiquent que le terminal d'utilisateur (1) et le dispositif électronique personnel portatif (4) sont à proximité étroite l'un de l'autre.

11. Procédé d'authentification de réseau destiné à être exécuté par un système d'authentification de réseau en vue de la vérification sécurisée 'de l'identité d'un utilisateur (5), le système d'authentification de réseau incluant un terminal d'utilisateur (1) exploité par l'utilisateur (5), un serveur de fournisseur de contenu (2), un serveur de vérification (3) et un dispositif de communication personnelle portatif (4') porté par l'utilisateur (5), le terminal d'utilisateur (1), le serveur de fournisseur de contenu (2), le serveur de vérification (3) et le dispositif de communication personnelle portatif (4') étant connectés à un réseau de communication (100), ledit procédé d'authentification de réseau étant **caractérisé par** les étapes ci-dessous dans lesquelles :
a) suite à la réception de données de connexion d'utilisateur correctes incluant un identifiant d'utilisateur, et de premières données de positionnement correspondant à un emplacement géographique du terminal d'utilisateur (1), en provenance du terminal d'utilisateur (1), par l'intermédiaire du réseau de communication (100), le serveur de fournisseur de contenu (2) transmet, au serveur de vérification (3), une première demande, qui comprend l'identifiant d'utilisateur, concernant des secondes données de positionnement, correspondant à un emplacement géographique en cours du dispositif de communication personnelle portatif (4') par l'intermédiaire du réseau de communication ;
b) suite à la réception de la première demande en provenance du serveur de fournisseur de contenu (2), le serveur de vérification (3) reçoit en outre des données d'identification de matériel et des secondes données de positionnement qui sont associées au dispositif de communication personnelle portatif (4'), en provenance du dispositif de communication personnelle portatif (4'), par l'intermédiaire du réseau de communication (100) ;
c) le serveur de vérification (3) détermine si les données d'identification de matériel obtenues à l'étape b) correspondent ou sont un sous-ensemble de données d'identification de matériel de référence (31), qui est stocké au préalable dans le serveur de vérification (3), et qui correspond à l'identifiant d'utilisateur, et transmet les secondes données de positionnement au serveur de fournisseur de contenu (2) si une correspondance existe ou si les données d'identification de matériel sont un sous-ensemble des données d'identification de matériel de référence (31) ; et
d) suite à la réception des secondes données de positionnement en provenance du serveur de vérification (3), le serveur de fournisseur de contenu (2) détermine, sur la base des premières données de positionnement reçues à l'étape a) et des secondes données de positionnement transmises à l'étape c), si le terminal d'utilisateur (1) et le dispositif de communication personnelle portatif (4') sont à proximité étroite l'un de l'autre, et détermine une authentification réussie de l'identité de l'utilisateur (5) dès lors qu'il est déterminé que le terminal d'utilisateur (1) et le dispositif de communication personnelle portatif (4') sont à proximité étroite l'un de l'autre.

12. Procédé d'authentification de réseau selon la revendication 11, en outre **caractérisé par**, entre les étapes a) et b), les étapes ci-dessous dans lesquelles :
e) en réponse à la première demande en provenance du serveur de fournisseur de contenu (2), le serveur de vérification (3) transmet une seconde demande pour les données d'identification de matériel et les secondes données de positionnement au dispositif de communication personnelle portatif (4') par l'intermédiaire du réseau de communication (100) ; et
f) en réponse à la seconde demande en provenance du serveur de vérification (3), le dispositif de communication personnelle portatif (4') met en oeuvre un positionnement de système GPS afin de générer les secondes données de positionnement correspondant à un emplacement géographique en cours du dispositif de communication personnelle portatif (4'), exécute un programme de balayage (42') installé au préalable dans celui-ci, en vue d'obtenir une combinaison de codes d'identification de certains composants d'une pluralité de composants matériels du dispositif de communication personnelle portatif (4') laquelle fait office des données d'identification de matériel, et transmet les secondes données de positionnement et les données d'identification de matériel au serveur de vérification (3) par l'intermédiaire du réseau de communication (100).

13. Procédé d'authentification de réseau selon la revendication 11, en outre **caractérisé par** l'étape ci-dessous dans laquelle :
g), le dispositif de communication personnelle portatif (4') met en oeuvre un positionnement de système GPS afin de générer les secondes données de positionnement d'une manière périodique, et exécute un programme de balayage (42') installé au préalable dans celui-ci en vue d'obtenir une combinaison de codes d'identification de certains composants d'une pluralité de composants matériels du dispositif de communication personnelle portatif (4'), laquelle fait office des données d'identification de matériel, automatiquement, et transmet les secondes données de positionnement et les données d'identification de matériel au serveur de vérification (3) par l'intermédiaire du réseau de communication (100) d'une manière périodique ; et
**caractérisé en ce que**, à l'étape c), les secondes données de positionnement, qui sont les plus récemment reçues par le serveur de vérification (3) à l'étape b) suite à la réception de la première demande en provenance du serveur de fournisseur de contenu (2), sont transmises au serveur de fournisseur de contenu (2).

14. Procédé d'authentification de réseau selon la revendication 11, **caractérisé en ce que**, à l'étape d), le serveur de fournisseur de contenu (2) détermine que le terminal d'utilisateur et le dispositif de communication personnelle portatif (4') sont à proximité étroite l'un de l'autre lorsque les premières données de positionnement sont identiques aux secondes données de positionnement.
